# FASCICULE DE BREVET EUROPEEN

(11) **EP 3 221 675 B1**
(45) Date de publication et mention de la délivrance du brevet: **03.03.2021**
(21) Numéro de dépôt: 15805593.9
(22) Date de dépôt: 18.11.2015
(51) Int. Cl.: G01K 1/08, G01K 7/02

(54) **CAPTEUR DE TEMPÉRATURE**
TEMPERATURSENSOR
TEMPERATURE SENSOR

(30) Priorité: 19.11.2014 FR 1461206
(43) Date de publication de la demande: 27.09.2017
(73) Titulaire: Valeo Systèmes de Contrôle Moteur, 95800 Cergy St Christophe (FR)
(72) Inventeur: DIXNEUF, Olivier, F-14370 Moult (FR); ZAKRZEWSKI, Piotr, F-78260 Acheres (FR); GRAVAT, Denis, F-94046 Creteil Cedex (FR); GELEZ, Nicolas, F-78230 Le Pecq (FR)
(74) Mandataire: Garcia, Christine
(86) Numéro de dépôt international: PCT/FR2015/053119
(87) Numéro de publication internationale: WO 2016/079428

(56) Documents cités:
- CA-C- 1 288 174
- DE-U1-202008 018 089
- GB-A- 1 000 462
- GB-A- 1 252 754
- US-A1- 2004 114 664

## Description

### Domaine technique

L'invention concerne un capteur de température comportant un thermocouple destiné à la mesure de températures comprises entre -40°C et 1200°C, notamment dans un groupe moteur thermique d'un véhicule automobile.

### Art antérieur

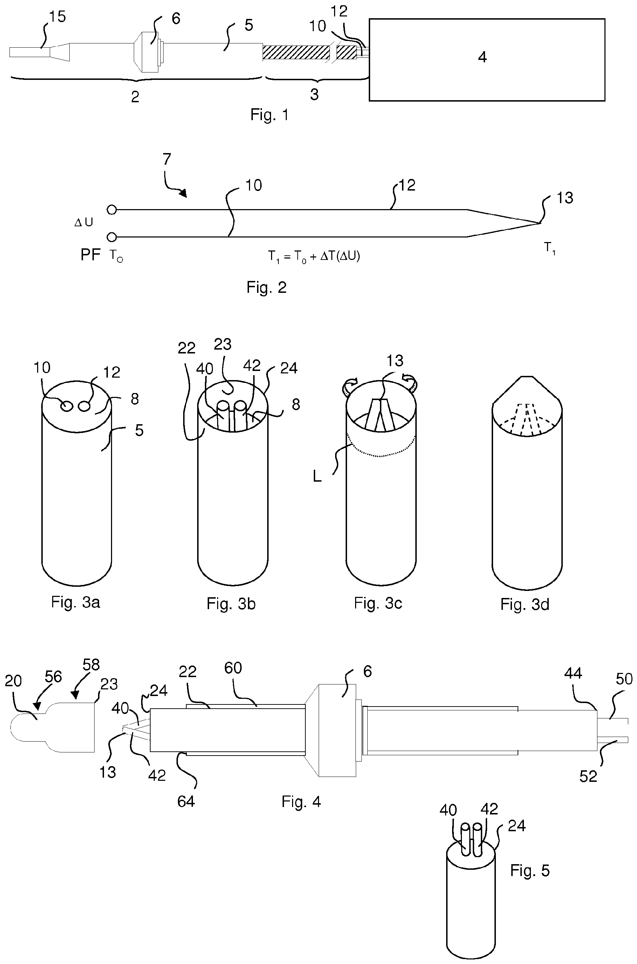

Comme représenté sur la figure 1, un dispositif de mesure de la température comporte classiquement un capteur de température 2 prolongé par un câble d'extension 3 permettant de connecter le capteur de température à un appareil de mesure 4. Le capteur de température 2 comporte classiquement une gaine de protection 5 métallique et une butée 6, montée sur la gaine de protection 5 et adaptée en fonction de l'application visée.

L'appareil de mesure 4 est destiné à interpréter le signal électrique fourni par le capteur de température 2 et transmis par l'intermédiaire du câble d'extension 3. Cette interprétation permet une évaluation de la température à laquelle l'extrémité du capteur de température est soumise.

A l'intérieur de la gaine de protection 5, le capteur de température 2 comporte classiquement un thermocouple 7 et un isolant minéral 8, classiquement en alumine ou en magnésie, ce qui permet au thermocouple de résister aux contraintes environnementales, et notamment à des températures élevées.

Comme illustré sur la figure 2, le thermocouple 7 est un assemblage de premier et deuxième fils conducteurs, 10 et 12, respectivement, connectés l'un à l'autre et bout-à-bout en un point chaud 13. La différence de potentiel ΔU aux bornes des premier et deuxième fils conducteurs dépend de la différence entre la température au point chaud T₁ et la température T₀ auxdites bornes, suivant l'effet Seebeck, bien connu.

Un capteur de température à thermocouple est notamment utilisé dans un groupe moteur thermique, dans lequel il est soumis à des températures comprises entre -40°C et 1200°C.

Pour fabriquer un capteur de température destiné à de telles applications, on procède classiquement suivant les étapes suivantes :
On fabrique d'abord un câble à isolant minéral 14, ou câble MIC (« mineral insulated cable », en anglais).

Un câble à isolant minéral comporte une gaine de protection 5 métallique, et, à l'intérieur de la gaine de protection 5, deux fils de thermocouple 10 et 12 en des matériaux adaptés pour former un thermocouple, les deux fils de thermocouple étant isolés l'un de l'autre et de la gaine de protection 5 au moyen de l'isolant minéral 8 (fig.3a).

Pour constituer la jonction entre les deux fils de thermocouple, ou « point chaud » 13, un peu d'isolant minéral est extrait d'une des extrémités du câble, par exemple par sablage ou grattage, typiquement sur une profondeur d'environ 2 à 10 mm. A cette extrémité dite « distale », les deux fils de thermocouple émergent ainsi de l'isolant, tout en étant ceinturés par la gaine de protection 5 (fig. 3b).

Les deux extrémités des fils de thermocouple ainsi dégagées sont rapprochées mécaniquement jusqu'à être mises en contact l'une avec l'autre, puis connectées, par exemple par soudure électrique (fig. 3c).

L'extrémité évidée de la gaine de protection peut être ensuite, optionnellement, remplie de matériau isolant, identique ou différent de l'isolant minéral du câble à isolant minéral. La gaine de protection est ensuite refermée (flèches de la figure 3c) de manière à protéger le thermocouple, par exemple par soudure électrique (fig. 3d).

Par ailleurs, après fermeture de la gaine de protection 5 ou avant la découpe du câble à isolant minéral, on réalise classiquement un rétreint 15 à l'extrémité distale de la gaine de protection 5, classiquement par tréfilage ou martelage. Le rétreint permet classiquement d'améliorer le temps de réponse du capteur de température sans affecter substantiellement sa capacité à résister aux vibrations.

Un tel procédé de fabrication est difficile à automatiser et implique actuellement des opérations manuelles délicates. Le document GB 1,000,462 décrit un procédé de fabrication d'un capteur de température utilisant un câble à isolant minéral. Une des extrémités du câble est dénudée de manière à dégager des extrémités des fils de thermocouple. Un point chaud est constitué par la connexion de ces fils. Un capuchon est enfin fixé de manière à protéger le point chaud.

Il existe donc un besoin pour une solution permettant de faciliter l'automatisation de la fabrication d'un capteur de température à thermocouple.

Un but de l'invention est de répondre à ce besoin.

### Résumé de l'invention

L'invention propose un procédé de fabrication d'un capteur de température à thermocouple comme défini dans la revendication 1.

Comme on le verra plus en détail dans la suite de la description, il n'est donc plus nécessaire de refermer la gaine de protection sur elle-même afin de protéger les fils de thermocouple, ni d'extraire d'isolant minéral pour évider la gaine de protection, ce qui facilite considérablement l'automatisation du procédé de fabrication.

Un procédé selon l'invention peut encore comporter une ou plusieurs des caractéristiques optionnelles préférées suivantes :
- le capuchon recouvre, après l'étape d), plus de 90% de la surface latérale extérieure de la gaine de protection ;
- le capuchon est conformé pour entrer en butée avec le chant de la gaine de protection et/ou pour guider le montage du capuchon sur la gaine de protection ;
- avant montage du capuchon, le capuchon est rempli d'un matériau isolant de manière qu'après montage du capuchon, les extrémités des fils de thermocouple soient isolées de l'extérieur par ledit matériau isolant ;

L'invention propose également un capteur de température à thermocouple comportant un câble à isolant minéral comportant deux fils de thermocouple définissant un point chaud et une gaine de protection, et un capuchon fixé de manière à protéger hermétiquement ledit point chaud.

Un capteur de température selon l'invention est fabriqué suivant un procédé selon l'invention, éventuellement adapté pour que le capteur de température présente une ou plusieurs des caractéristiques optionnelles décrites ci-après.

Un capteur de température selon l'invention peut encore comporter une ou plusieurs des caractéristiques optionnelles et préférées suivantes :
- de préférence, le câble à isolant minéral est dépourvu de rétreint ;
- le capuchon recouvre plus de 10%, plus de 30%, plus de 60%, plus de 90%, de préférence sensiblement 100% de la surface latérale extérieure de la gaine de protection ;
- le capuchon est conformé pour entrer en butée avec le chant de la gaine de protection et/ou pour guider le montage du capuchon sur la gaine de protection ;
- la paroi du tube de renfort présente une épaisseur supérieure à 0,3 mm et/ou inférieure à 1,2 mm;
- le capuchon et le tube de renfort recouvrent ensemble plus de 10%, plus de 30%, plus de 60%, plus de 90%, de préférence sensiblement 100% de la surface latérale extérieure de la gaine de protection du câble à isolant minéral ;
- le capteur de température comporte une butée mécanique fixée, de préférence soudée, sur la gaine de protection ou le tube de renfort ;
- le capuchon est fixé sur la gaine de protection du câble à isolant minéral et/ou sur un tube de renfort contenant le câble à isolant minéral ;
- le capuchon est fixé, de préférence par soudure laser, à une extrémité distale de la gaine de protection et/ou, de préférence, sur la surface latérale extérieure de la gaine de protection ;
- le capuchon est rempli d'un matériau isolant, de préférence sous forme de poudre, identique ou différent de l'isolant minéral du câble à isolant minéral, de préférence en un matériau choisi parmi l'alumine et/ou la magnésie.

L'invention concerne également l'utilisation d'un capteur de température selon l'invention dans un environnement à une température supérieure à 800°C, supérieure à 900°C, supérieure à 1000°C, supérieure à 1100°C, et/ou inférieure à -20°C, inférieure à -30°C, de préférence variant entre -40°C et 1200°C, et en particulier dans un groupe moteur thermique d'un véhicule automobile.

L'invention concerne enfin un groupe moteur thermique d'un véhicule automobile comportant un capteur de température selon l'invention, et un véhicule automobile comportant un groupe moteur thermique selon l'invention. Le capteur de température peut être en particulier disposé dans le collecteur d'échappement en amont d'une turbine d'un turbocompresseur ou dans une tubulure d'admission de carburant ou de comburant ou dans une tubulure d'échappement.

### Brève description des figures

D'autres caractéristiques et avantages de l'invention apparaîtront encore à la lecture de la description détaillée qui va suivre, et à l'examen du dessin annexé dans lequel ;
- la figure 1 représente, schématiquement, un capteur de température connecté à un appareil de mesure ;
- la figure 2 illustre schématiquement le principe de fonctionnement d'un thermocouple ;
- la figure 3 (fig. 3a à 3d) illustre le procédé de fabrication d'un capteur de température selon la technique antérieure ;
- la figure 4 représente un capteur de température selon l'invention, avant fixation du capuchon ; et
- la figure 5 représente un capteur de température selon l'invention, avant dénudage.

### Définitions

- Par « proximal » et « distal », on distingue les deux côtés d'un capteur de température selon l'invention. Le côté « distal » est celui du point chaud.
- Par « point chaud », on désigne classiquement la jonction entre les deux fils de thermocouple, indépendamment de sa température.
- Par « comportant un », « présentant un » ou « comprenant un », on entend « comportant au moins un », sauf indication contraire.
- Des références identiques sont utilisées pour désigner des organes analogues dans les différentes figures.

### Description détaillée

Les figures 1 à 3 ayant été décrites en préambule, on se reporte à présent à la figure 4.

Tout câble à isolant minéral de la technique antérieure utilisé pour fabriquer un capteur à thermocouple peut être mis en oeuvre.

De préférence, le diamètre extérieur de la gaine de protection 5 est supérieur à 4 mm, de préférence supérieur ou égal à 4,5 mm et/ou inférieur à 7 mm, de préférence inférieur à 6 mm.

La gaine de protection peut être en un matériau conducteur électriquement quelconque.

Les fils de thermocouple peuvent être souples ou rigides. De préférence, ils présentent une section transversale sensiblement circulaire. De préférence encore, la plus grande dimension et/ou la plus petite dimension d'une section transversale d'un fil de thermocouple est supérieure ou égale à 0,2 et/ou inférieure ou égale à 1.

Selon un mode de réalisation de l'invention, le couple de matériaux des premier et deuxième fils de thermocouple 10 et 12 est choisi dans le groupe constitué des couples de matériaux suivants : NiSil/NiCroSil.

Les parties en saillie 50 et 52 des fils de thermocouple 10 et 12 qui s'étendent éventuellement au-delà de l'extrémité proximale 44 du câble à isolant minéral peuvent présenter une longueur supérieure à 5 cm, supérieure à 10 cm, supérieure à 20 cm, supérieure à 50 cm. Avantageusement, ces fils peuvent ainsi servir de câble d'extension 3, pour connecter électriquement le capteur de température 2 de l'appareil de mesure 4. Bien entendu, si les fils de thermocouple sont utilisés comme câble d'extension, lesdites parties en saillie 50 et 52 doivent être isolées électriquement.

A leur extrémité proximale, les fils de thermocouple 10 et 12 comportent des moyens de connexion électrique, par exemple des bornes de connexion autorisant leur connexion à l'appareil de mesure 4 et/ou à un câble d'extension 3.

De préférence encore, une butée mécanique 6 est fixée, de préférence soudée, sur la surface latérale extérieure de la gaine de protection. La butée mécanique 6 permet avantageusement une adaptation locale précise du diamètre du capteur de température, et donc une bonne adéquation à l'application visée.

De préférence, la plus grande dimension transversale de la butée mécanique (c'est-à-dire dans un plan perpendiculaire à la direction longitudinale correspondant à la longueur du câble à isolant minéral) est supérieure à 8 mm et/ou inférieure à 25 mm.

Comme représenté sur la figure 4, la protection définie, selon la technique antérieure, par la gaine de protection 5 du câble à isolant minéral 14, est remplacée par un capuchon 20. De préférence, le capuchon est en inconel.

De préférence, le diamètre extérieur maximal du capuchon 20 est supérieur à 4 mm, de préférence supérieur ou égal à 4,5 mm et/ou inférieur à 7 mm, de préférence inférieur à 6 mm.

Le capuchon de l'invention présente un rétreint 56. L'utilisation d'un capuchon rapporté facilite avantageusement l'obtention de formes complexes pour le rétreint. En outre, les risques d'endommager les fils de thermocouple sont réduits.

De préférence encore, le rétreint 56 s'étend jusqu'à l'extrémité distale du capuchon 20, comme représenté. Avantageusement, un rétreint 56 améliore le temps de réponse du capteur.

Pour disposer d'un temps de réponse adapté, le diamètre extérieur du rétreint au niveau du point chaud est inférieur à 2 mm.

Le rétreint 56 peut également servir de butée mécanique facilitant l'assemblage du capuchon 20 sur le câble à isolant minéral. De préférence encore, le capuchon 20 comporte, dans le prolongement du rétreint 56, une partie élargie 58 de forme sensiblement complémentaire au câble à isolant minéral, de sorte que le câble à isolant minéral puisse guider le capuchon 20 lors de son montage.

De préférence, le capuchon est rempli d'un matériau isolant, de préférence en poudre, de préférence de nature minérale, qui peut être identique ou différent de celui contenu dans la gaine de protection du câble à isolant minéral. De préférence, le matériau isolant est en un matériau choisi parmi l'alumine et/ou la magnésie.

Selon l'invention, le capteur de température est fabriqué suivant les étapes a) à d) ci-dessus.

Les étapes a) à c) peuvent correspondre aux étapes classiquement mises en oeuvre selon la technique antérieure, comme décrit en préambule.

A l'étape a), on prépare un câble à isolant minéral ou un tronçon de câble à isolant minéral.

A l'étape b), à la différence d'un procédé conventionnel, les extrémités des fils de thermocouple sont dénudées, c'est-à-dire que la partie de la gaine de protection qui les entoure (et qui contient l'isolant minéral qui est classiquement extrait) est découpée, de manière à dégager des extrémités distales des fils de thermocouple.

La ligne de découpe L est représentée en pointillés sur la figure 3c. L'opération de dénudage consiste de préférence à découper simultanément la gaine de protection et l'isolant minéral dans le plan transversal contenant la ligne de découpe L, puis à extraire la tranche ainsi découpée de manière à exposer les extrémités distales 40 et 42 des fils de thermocouple.

A l'issue de l'étape b), les extrémités des fils de thermocouple s'étendent ainsi longitudinalement (selon la direction de la longueur du câble à isolant minéral) au-delà de la gaine de protection et de l'isolant minéral, comme représenté sur la figure 5. L'absence de ceinture (par la gaine de protection) autour des deux extrémités des fils de thermocouple facilite considérablement leur connexion, et en particulier leur soudure, à l'étape c).

A l'étape c), comme représenté sur la figure 4, les extrémités distales 40 et 42 des fils de thermocouple 10 et 12 sont ensuite connectées l'une à l'autre, c'est-à-dire mises en contact physique et électrique, de manière définitive, de manière à former un point chaud 13. La connexion est de préférence réalisée par soudure à chaud.

A l'étape d), le thermocouple résultant de la connexion des deux fils de thermocouple est protégé au moyen d'un capuchon 20, de préférence en inconel.

Le capuchon 20 peut être fixé sur la surface latérale extérieure 22 de la gaine de protection. Dans un mode de réalisation, le chant 23 du capuchon 20 (qui délimite l'ouverture du capuchon 20) peut être fixé sur le chant 24 de la gaine de protection du câble à isolant minéral.

Le capuchon 20 peut être fixé rigidement par tout moyen, par exemple au moyen d'une colle appropriée, de préférence soudé, de manière à définir une chambre hermétique logeant les parties distales en saillie 40 et 42 des fils de thermocouple.

De préférence, ladite chambre est remplie d'un matériau isolant, identique ou différent de l'isolant minéral du câble à isolant minéral, de préférence en poudre, disposé dans le capuchon avant sa fixation sur le tube de support 30. La poudre de matériau isolant peut être en particulier une poudre d'alumine ou une poudre de magnésie.

Selon l'invention, le capteur de température comporte encore un tube de renfort 60, de préférence en acier inoxydable, couvrant, au moins partiellement, la gaine de protection. De plus, selon l'invention, le tube de renfort 60 vient prolonger le capuchon 20 afin de couvrir avec lui toute la surface latérale extérieure de la gaine de protection. De préférence, le capuchon et le tube de renfort définissent ensemble une enceinte autour du câble à isolant minéral. De préférence cette enceinte est étanche au moins dans la partie du capteur de température qui s'étend depuis la butée mécanique 6 jusqu'à l'extrémité distale 62 du capteur de température, de préférence dans la partie du capteur de température qui s'étend depuis l'extrémité proximale du câble à isolant minéral jusqu'à l'extrémité distale 62 du capteur de température.

De préférence, la paroi du tube de renfort présente une épaisseur comprise entre 0,3 mm et 1,2 mm.

De préférence encore, la lumière du tube de renfort 60 est de forme sensiblement complémentaire à la surface latérale extérieure de la gaine de protection 5.

Dans un mode de réalisation, le capuchon 20 est fixé sur le chant 64 de l'extrémité distale du tube de renfort 60 et/ou sur sa surface intérieure ou sa surface extérieure. Dans un mode de réalisation, le capuchon 20 et le tube de renfort 60 forment un ensemble monolithique, c'est-à-dire que le tube de renfort 60 est venu de matière avec le capuchon 20.

Comme cela apparaît clairement à présent, les étapes d'un procédé de fabrication selon l'invention sont simples et peuvent être automatisées. Il en résulte une réduction importante du coût de fabrication.

L'invention permet également l'obtention de formes complexes pour le rétreint. Enfin, elle conduit à une réduction très sensible des risques d'endommager les fils de thermocouple.

Bien entendu, l'invention n'est pas limitée au mode de réalisation décrit et représenté, fourni à des fins illustratives seulement.

## Revendications

1. Procédé de fabrication d'un capteur de température à thermocouple comportant les étapes successives suivantes :
a) fabrication d'un câble à isolant minéral (14) comportant une gaine de protection et deux fils de thermocouple (10,12) s'étendant dans la gaine de protection sur toute la longueur du câble à isolant minéral et noyés dans un isolant minéral (8);
b) dénudage d'une des extrémités du câble à isolant minéral sur une longueur comprise entre 2 et 20 mm, de manière à dégager des extrémités (40,42) des fils de thermocouple ;
c) connexion des extrémités (40,42) des fils de thermocouple ainsi dégagées, de manière à constituer un point chaud (13) de thermocouple ;
d) fixation d'un capuchon (20) sur ledit câble à isolant minéral de manière à protéger ledit point chaud,
le capuchon (20) présentant un rétreint (56), le diamètre du rétreint au niveau du point chaud après l'étape d) étant inférieur à 2 mm,
e) insertion du câble à isolant minéral comportant une gaine de protection (5) dans un tube de renfort (60), le tube de renfort 60 venant prolonger le capuchon (20) afin de couvrir avec lui toute la surface latérale extérieure de la gaine de protection (5).

2. Procédé selon l'une quelconque des revendications précédentes, dans lequel le capuchon (20) recouvre, après l'étape d), plus de 90% de la surface latérale extérieure (22) de la gaine de protection (5).

3. Procédé selon l'une quelconque des revendications précédentes, dans lequel le capuchon (20) est conformé pour entrer en butée avec le chant de la gaine de protection et/ou pour guider le montage du capuchon sur la gaine de protection.

4. Procédé selon l'une quelconque des revendications précédentes, dans lequel, avant montage du capuchon, le capuchon est rempli d'un matériau isolant de manière qu'après montage du capuchon, les extrémités (40,42) des fils de thermocouple soient isolées de l'extérieur par ledit matériau isolant.

5. Capteur de température fabriqué suivant un procédé selon l'une quelconque des revendications précédentes.

6. Groupe moteur thermique d'un véhicule automobile comportant un capteur de température selon la revendication 5.

## Patentansprüche

1. Verfahren zur Herstellung eines Temperatursensors mit Thermoelement, welches die folgenden aufeinander folgenden Schritte umfasst:
a) Herstellen eines mineralisolierten Kabels (14), das eine Schutzhülle und zwei Thermoelementdrähte (10, 12), die sich in der Schutzhülle über die gesamte Länge des mineralisolierten Kabels erstrecken und in ein mineralisches Isolationsmaterial (8) eingebettet sind, aufweist;
b) Abisolieren eines der Enden des mineralisolierten Kabels auf einer Länge zwischen 2 und 20 mm, um Enden (40, 42) der Thermoelementdrähte freizulegen;
c) Verbinden der Enden (40, 42) der so freigelegten Thermoelementdrähte, um eine warme Stelle (13) des Thermoelements zu bilden;
d) Befestigen einer Kappe (20) auf dem mineralisolierten Kabel, um die warme Stelle zu schützen;
wobei die Kappe (20) eine Einschnürung (56) aufweist, wobei der Durchmesser der Einschnürung an der warmen Stelle nach Schritt d) kleiner als 2 mm ist,
e) Einschieben des mineralisolierten Kabels, das eine Schutzhülle (5) aufweist, in ein Verstärkungsrohr (60), wobei das Verstärkungsrohr (60) die Kappe (20) verlängert, um mit ihr die gesamte äußere Seitenfläche der Schutzhülle (5) zu bedecken.

2. Verfahren nach einem der vorhergehenden Ansprüche, wobei die Kappe (20) nach Schritt d) mehr als 90 % der äußeren Seitenfläche (22) der Schutzhülle (5) bedeckt.

3. Verfahren nach einem der vorhergehenden Ansprüche, wobei die Kappe (20) dafür ausgebildet ist, an der Schmalseite der Schutzhülse zur Anlage zu kommen und/oder die Anbringung der Kappe auf der Schutzhülse zu führen.

4. Verfahren nach einem der vorhergehenden Ansprüche, wobei nach Anbringung der Kappe die Kappe mit einem Isoliermaterial gefüllt wird, so dass nach Anbringung der Kappe die Enden (40, 42) der Thermoelementdrähte durch das Isoliermaterial gegenüber der Außenseite isoliert sind.

5. Temperatursensor, der gemäß einem Verfahren nach einem der vorhergehenden Ansprüche hergestellt wurde.

6. Verbrennungsmotoreinheit eines Kraftfahrzeugs, welche einen Temperatursensor nach Anspruch 5 aufweist.

## Claims

1. Method for manufacturing a thermocouple temperature sensor, comprising the following successive steps:
a) manufacture of a mineral insulated cable (14) comprising a protective sheath and two thermocouple wires (10, 12) extending inside the protective sheath over the entire length of the mineral insulated cable and embedded in a mineral insulation (8);
b) stripping of one of the ends of the mineral insulated cable over a length of between 2 and 20 mm so as to uncover ends (40, 42) of the thermocouple wires;
c) connection of the ends (40, 42) of the thermocouple wires thus uncovered, so as to constitute a thermocouple hot junction (13);
d) fixing of a cap (20) onto the said mineral insulated cable so as to protect the said hot junction,
the cap (20) having a restriction (56), the diameter of the restriction at the level of the hot junction after step d) being less than 2 mm,
e) insertion of the mineral insulated cable comprising a protective sheath (5) into a reinforcing tube (60), the reinforcing tube 60 extending the cap (20) in order therewith to cover the entire exterior lateral surface of the protective sheath (5).

2. Method according to any one of the preceding claims, wherein the cap (20), after step d), covers more than 90% of the exterior lateral surface (22) of the protective sheath (5).

3. Method according to either one of the preceding claims, wherein the cap (20) is configured to come into abutment against the edge space of the protective sheath and/or to guide the mounting of the cap on the protective sheath.

4. Method according to any one of the preceding claims, wherein, before the cap is mounted, the cap is filled with an insulating material so that after the cap has been mounted, the ends (40, 42) of the thermocouple wires are insulated from the outside by the said insulating material.

5. Temperature sensor manufactured according to a method according to any one of the preceding claims.

6. Motor vehicle combustion engine unit comprising a temperature sensor according to Claim 5.
